(19) Europäisches Patentamt
European Patent Office
Office européen des brevets

(11) **EP 0 877 951 B1**

(12) **EUROPÄISCHE PATENTSCHRIFT**

(45) Veröffentlichungstag und Bekanntmachung des Hinweises auf die Patenterteilung:
**16.02.2000 Patentblatt 2000/07**

(51) Int Cl.$^7$: **G01S 5/16**, G01S 17/93

(21) Anmeldenummer: **96945719.1**

(86) Internationale Anmeldenummer:
**PCT/DE96/02150**

(22) Anmeldetag: **12.11.1996**

(87) Internationale Veröffentlichungsnummer:
**WO 97/28457 (07.08.1997 Gazette 1997/34)**

(54) **VORRICHTUNG ZUR ABSTANDS- UND/ODER POSITIONSBESTIMMUNG**

RANGE AND/OR POSITION MEASUREMENT EQUIPMENT

DISPOSITIF POUR LA DETERMINATION D'UNE DISTANCE ET/OU D'UNE POSITION

(84) Benannte Vertragsstaaten:
**DE ES FR GB IT**

(30) Priorität: **30.01.1996 DE 19603267**

(43) Veröffentlichungstag der Anmeldung:
**18.11.1998 Patentblatt 1998/47**

(73) Patentinhaber: **ROBERT BOSCH GMBH**
**70442 Stuttgart (DE)**

(72) Erfinder: **GAILLARD, Alain**
**D-76133 Karlsruhe (DE)**

(56) Entgegenhaltungen:
**EP-A- 0 686 857**          **US-A- 5 280 287**
**US-A- 5 296 924**

**Beschreibung**

Stand der Technik

Die Erfindung betrifft eine Vorrichtung zur Abstands- und/oder Positionsbestimmung eines Objekts relativ zu einem Meßort, mit einem optischen Abstandsmesser. Sie betrifft desweiteren ein Verfahren zur Ermittlung des Abstands- und/oder der räumlichen Position eines Objekts relativ zu einem Meßort.

Ein solches Meßverfahren beziehungsweise eine entsprechende Vorrichtung zur Ausführung dieses Meßverfahrens ist aus dem Stand der Technik bekannt. So werden solche Vorrichtungen zur Positionsbestimmung beispielsweise in sogenannten ACC-Systemen (Adaptive Cruise Control) eingesetzt, um unter anderem abhängig von dem Abstand und der Position eines vorausfahrenden Fahrzeugs automatisch zu beschleunigen oder abzubremsen.

Die Vorrichtung umfaßt dafür einen Abstandssensor, der einen vor dem Fahrzeug liegenden Bereich nach dem zu erfassenden Objekt abtastet. Der Lichtstrahl wird vom Objekt reflektiert und vom Abstandssensor erfaßt. Anhand der Lichtlaufzeit zwischen Meßort, das heißt dem Fahrzeug, und dem detektierten Objekt kann ein erster Abstandswert ermittelt werden.

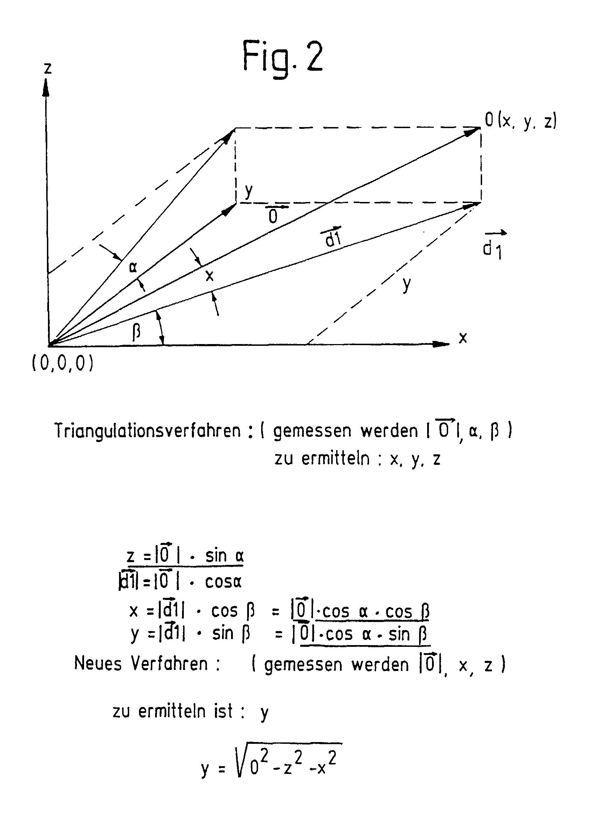

Dieser Abstandswert alleine genügt jedoch noch nicht für die Bestimmung der räumlichen Position des Objekts relativ zum Meßort, da der Abstandssensor nicht fest fixiert sondern um zumindest eine Achse schwenkbar angeordnet ist. Zur besseren Verdeutlichung ist in Figur 2 ein Koordinatensystem gezeigt, in dessen Ursprung der Meßort liegt. Das detektierte Objekt ist mit O gekennzeichnet.

Der Abstandssensor liefert nun die Länge des Vektors O, der sich vom Ursprung zum Objekt O erstreckt. Diese Länge beziehungsweise dieser Abstandswert liefert jedoch noch keinen Aufschluß über die räumliche Position des detektierten Objekts.

Um mit Hilfe des Triangulationsverfahrens die exakte räumliche Position zu berechnen, müssen zusätzlich die gezeigten Winkel $\alpha$ und $\beta$ vorliegen. Dann können die Koordinatenwerte x, y und z des Punktes O, wie in Figur 2 gezeigt, errechnet werden.

Diese beiden Winkel $\alpha$ und $\beta$ werden von Winkelsensoren geliefert, die dem Abstandssensor zugeordnet sind und die Drehbewegung um jeweils eine Achse erfassen. Eine derartige Vorrichtung ist z.B. aus US-A-5 296 924 bekannt.

Diese Vorrichtung hat jedoch den Nachteil, daß zur Winkelerfassung elektromechanische Systeme, wie beispielsweise Potentiometer eingesetzt werden müssen, die einerseits teuer und andererseits störanfällig sind. Darüber hinaus besitzen sie zumeist eine nur begrenzte Lebensdauer.

Vorteile der Erfindung

Die erfindungsgemäße Vorrichtung zur Abstands- und/oder Positionsbestimmung mit den Merkmalen des Anspruchs 1 beziehungsweise das erfindungsgemäße Verfahren zur Ermittlung einer räumlichen Position hat demgegenüber den Vorteil, daß zur Ermittlung der räumlichen Position keine Werte über die Winkelposition des Abstandssensors mehr benötigt werden. Durch den Wegfall weiterer elektromechanischer Bauteile ist somit eine Verringerung der Störanfälligkeit erzielt.

Dadurch, daß eine Bilderfassungseinrichtung vorgesehen ist, kann anhand des aufgenommenen Bildes die relative Position des Objekts zumindest in einer Ebene berechnet werden. Die noch fehlende dritte Koordinate läßt sich dann aus dem Abstandswert und den beiden anderen Koordinaten einfach berechnen.

Vorzugsweise handelt es sich bei der Bilderfassungseinrichtung um eine Videokamera mit einer CCD-Zelle, wobei die Pixelauflösung dieser Zelle die Meßgenauigkeit bestimmt. Als vorteilhaft hat sich eine Bilderfassungseinrichtung herausgestellt, die besonders empfindlich auf die Wellenlänge des vom Abstandssensor ausgestrahlten Lichts reagiert.

Die erfindungsgemäße Vorrichtung eignet sich insbesondere zur Verwendung in einem ACC-(**A**daptive **C**ruise **C**ontrol)-System eines Fahrzeugs.

Durch die in den weiteren Unteransprüchen genannten Maßnahmen sind vorteilhafte Weiterbildungen und Verbesserungen der im Anspruch 1 angegebenen Vorrichtung möglich.

Zeichnung

Im folgenden wird die Erfindung anhand eines Ausführungsbeispiels mit Bezug auf die Zeichnung näher erläutert. Es zeigen:

Figur 1     eine schematische Darstellung der erfindungsgemäßen Vorrichtung,

Figur 2     eine Darstellung eines Koordinatensystems zur Erläuterung des Meßverfahrens, und

Fugur 3     ein Flußdiagramm der Positionsbestimmung.

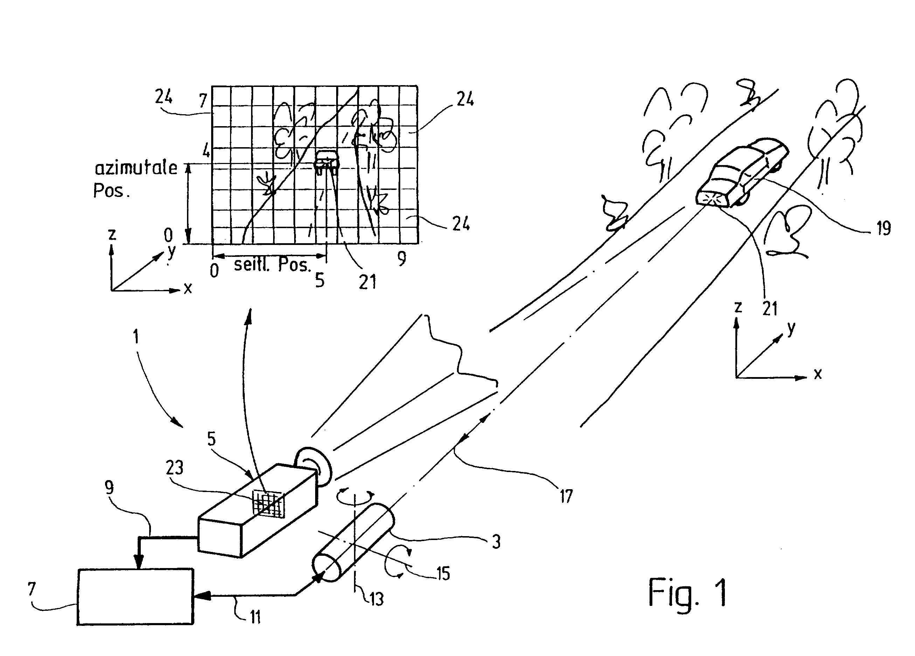

In Figur 1 sind die wesentlichen Komponenten eines Meßsystems zur Positionsbestimmung dargestellt. Dieses Meßsystem 1 umfaßt einen optischen Abstandsmeßsensor 3, eine Videokamera 5 und eine Steuer- und Auswerteeinrichtung 7, der über Leitungen 9 und 11 Daten vom Abstandsmeßsensor 3 beziehungsweise von der Videokamera 5 zuführbar sind.

Der Abstandsmeßsensor 3 ist mittels nicht gezeigter Antriebe einerseits um eine senkrechte Achse 13 und andererseits um eine waagrechte Achse 15 drehbar gelagert. Die Ansteuerung der nicht dargestellten Antriebe erfolgt über die Steuereinrichtung 7. Durch entsprechende Ansteuerung der Antriebe ist es möglich, eine x-z-Ebene mit einem vom Abstandsmeßsensor ausgestrahlten Lichtstrahl 17 abzutasten. Somit kann also ein vor der Meßeinrichtung 1 liegendes Objekt 19, beispielsweise ein Fahrzeug, mit dem Lichtstrahl 17 erfaßt werden.

Der auf eine reflektierende Fläche 21 am Fahrzeug 19 auftreffende Lichtstrahl 17 wird reflektiert und zur Meßeinrichtung 1 zurückgeschickt. Ein entsprechender Lichtsensor im Abstandsmeßsensor detektiert diesen reflektierten Strahl, so daß anhand der Laufzeit dieses Lichtstrahls der Abstand zwischen Meßeinrichtung 1 und Objekt 19 ermittelt werden kann.

Der Abstand alleine genügt zur Positionsbestimmung des Objekts 19, das heißt zur Bestimmung aller drei Raumkoordinaten x, y, z noch nicht aus.

Die neben dem Abstandssensor 3 angeordnete Videokamera 5 nimmt die vom Abstandssensor abgetastete Fläche auf und bildet sie mittels eines Linsensystems auf ein optoelektronisches Element, beispielsweise eine CCD-Einheit 23 mit einer Vielzahl von einzelnen Zellen 24 ab. Zur Verdeutlichung ist das auf diesem optoelektronischen Element 23 entstehende Bild zeichnerisch herausgestellt.

Bei der Positionierung der Videokamera 5 ist darauf zu achten, daß das optoelektronische Element 23 in der z-x-Ebene liegt, so daß keine das Meßungsergebnis verfälschende Verzerrungen entstehen.

Die von den einzelnen CCD-Zellen 24 der CCD-Einheit 23 gelieferten Signale werden über die Leitung 9 an die Steuer- und Auswerteeinrichtung 7 übertragen.

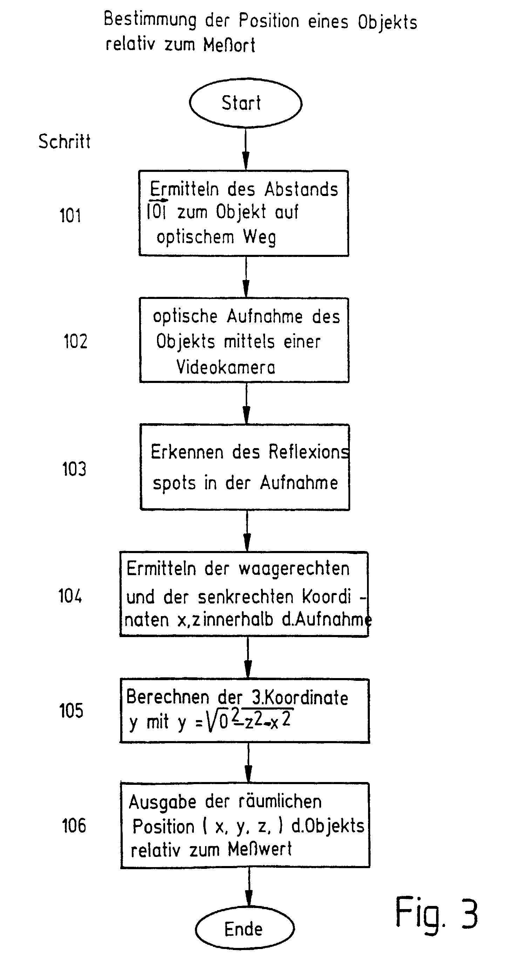

Die Bearbeitung dieser Signale in der Auswertungseinrichtung 7 wird nun anhand der Figur 3 erläutert.

Während der Abstand zum Objekt auf optischem Weg ermittelt wird (Schritt 101), macht die Videokamera eine Aufnahme, in der das Objekt abgebildet sein sollte (Schritt 102).

Die Auswertung der Aufnahme beziehungsweise des Bildes besteht zunächst darin, einen Reflexionsspot 21 zu erkennen (Schritt 103) und danach dessen Lage innerhalb des Bildes zu bestimmen. Anhand der Lage der den Reflexionsspot 21 detektierenden CCD-Zelle innerhalb der CCD-Einheit kann nämlich auf die Lage des Objekts geschlossen werden. Wie aus dem dargestellten Videobild zu erkennen ist, wird somit eine z-Koordinate (azimutale Position) und eine x-Koordinate (seitliche Position) geliefert (Schritt 104). Im in Figur 1 gezeigten Beispiel wären danach x = 5 und z = 4.

Zur Vervollständigung der Positionsbestimmung des Objekts 19 fehlt nun lediglich noch die y-Koordinate. Diese kann, wie in Figur 2 gezeigt, aus dem Abstandswert und den beiden bereits ermittelten Koordinaten nach der Formel

$$y = \text{Abstandswert}^2 - z^2 - x^2$$

berechnet werden (Schritte 105, 106).

Damit ist die exakte Position des Objekts 19 relativ zu der Meßeinrichtung 1 ermittelt, ohne auf Winkelmeßsignale zurückgreifen zu müssen.

Selbstverständlich können statt der Videokamera 5 auch andere optoelektronische Geräte verwendet werden, sofern sie in der Lage sind, den Reflexionsspot zu detektieren.

**Patentansprüche**

1. Vorrichtung zur Abstands- und/oder Positionsbestimmung eines Objekts (19) relativ zu einem Meßort, mit einer optischen Abstandsmeßeinrichtung (3), mit einer Bilderfassungseinrichtung (5) zur Aufnahme des Objekts (19), und einer Auswerteeinrichtung (7), der Bildsignale der Bilderfassungseinrichtung (5) zugeführt werden und die anhand des Abstandswerts der Abstandsmeßeinrichtung (3) und der Position des Objekts (19) innerhalb der Bildaufnahme die räumliche Position des Objekts ermittelt, dadurch gekennzeichnet, daß die Auswerteeinrichtung (7) ausgebildet ist, aus einem vom Meßort aufgenommenen Bild des Objekts (19) zwei räumliche Koordinaten in einer zur Bildebene parallelen Ebene und eine dritte Koordinate aus dem Abstandswert und den beiden anderen räumlichen Koordinaten zu ermitteln.

2. Vorrichtung nach Anspruch 1, dadurch gekennzeichnet, daß die Abstandsmeßeinrichtung (3) zumindest in einer, vorzugsweise zwei Ebenen drehbar angeordnet ist.

3. Vorrichtung nach einem der vorhergehenden Ansprüche, dadurch gekennzeichnet, daß die Bilderfassungseinrichtung (5) eine Videokamera mit einem optoelektronischen Element (23), vorzugsweise einer CCD-Einheit, ist.

4. Vorrichtung nach Anspruch 1, dadurch gekennzeichnet, daß die Abstandsmeßeinrichtung (3) die Laufzeit des ausgestrahlten und reflektierten Lichtstrahls mißt.

5. Vorrichtung nach Anspruch 1, dadurch gekennzeichnet, daß die Bilderfassungseinrichtung (5) so ausgebildet ist, daß sie empfindlich auf den vom Objekt (19) reflektierten Lichtstrahl (17) der Abstandsmeßeinrichtung ist.

6. Verfahren zur Ermittlung des Abstands und/oder der räumlichen Position eines Objekts (19) relativ zu einem bestimmten Meßort, wobei eine optische Abstandsmeßeinrichtung (3) den Abstand zwischen Meßort und Objekt (19) liefert, dadurch gekennzeichnet, daß mittels eines vom Meßort aus aufgenommenen Bilds des Objekts (19) zwei räumliche Koordinaten in einer zur Bildebene parallelen Ebene ermittelt werden, und daß eine dritte räumliche Koordinate aus dem Abstandswert und den beiden anderen räumlichen Koordinaten ermittelt wird.

## Claims

1. Device for determining the range and/or position of an object (19) relative to a measuring point, having an optical range-measuring device (3), having an image-acquiring device (5) for recording the object (19), and an evaluation device (7) which is fed image signals from the image-acquiring device (5) and which determines the spatial position of the object with the aid of the range value of the range-measuring device (3) and the position of the object (19) inside the image record, characterized in that the evaluation device (7) is constructed in order to determine two spatial coordinates in a plane parallel to the image plane from an image of the object (19) taken from the measuring point, and to determine a third coordinate from the range value and the two other spatial coordinates.

2. Device according to Claim 1, characterized in that the range-measuring device (3) is arranged rotatably at least in one, preferably two planes.

3. Device according to one of the preceding claims, characterized in that the image-acquiring device (5) is a video camera having an optoelectronic element (23), preferably a CCD unit.

4. Device according to Claim 1, characterized in that the range-measuring device (3) measures the transit time of the emitted and reflected light beam.

5. Device according to Claim 1, characterized in that the image-acquiring device (5) is constructed such that it is sensitive to the light beam (17), reflected by the object (19), of the range-measuring device.

6. Method for determining the range and/or the spatial position of an object (19) relative to a specific measuring point, an optical range-measuring device (3) supplying the range between the measuring point and object (19), characterized in that two spatial coordinates are determined in a plane parallel to the image plane by means of an image of the object (19) taken from the measuring point, and in that a third spatial coordinate is determined from the range value and the two other spatial coordinates.

## Revendications

1. Dispositif pour déterminer la distance et/ou la position d'un objet (19) par rapport à un poste de mesure, comprenant un dispositif optique de mesure de distance (3), avec un dispositif de prise de vues (5) pour prendre une image de l'objet (19) et un dispositif d'exploitation (7) qui reçoit des signaux d'image du dispositif de prise de vues (5) et qui, en fonction de la valeur de la distance fournie pour le dispositif de calcul de distance (3) et de la position de l'objet (19) à l'intérieur de la prise de vue, détermine la position de l'objet,
caractérisé en ce que
le dispositif d'exploitation (7) détermine à partir d'une image de l'objet (19) prise à partir du poste de mesure, deux coordonnées dans l'espace, dans un plan parallèle au plan de l'image et il détermine une troisième coordonnée à partir de la valeur de la distance et des deux autres coordonnées dans l'espace.

2. Dispositif d'après la revendication 1,
caractérisé en ce que
le dispositif de mesure de distance (3) est monté rotatif dans au moins un plan et de préférence deux plans.

3. Dispositif selon l'une des revendications précédentes,
caractérisé en ce que
le dispositif de prise de vues (5) est une caméra vidéo avec un élément optoélectronique (23), de préférence une unité CCD.

4. Dispositif selon la revendication 1,
caractérisé en ce que
le dispositif de mesure de distance (3) mesure le temps de parcours du rayon lumineux émis et réfléchi.

5. Dispositif selon la revendication 1,
caractérisé en ce que
le dispositif de prise de vue (5) est réalisé de sorte qu'il soit sensible au rayon lumineux (17) du dispositif de mesure de distance réfléchi sur l'objet (19).

6. Procédé pour déterminer la distance et/ou la position dans l'espace d'un objet (19) par rapport à un poste de mesure prédéterminé, selon lequel un dispositif de mesure de distance optique (3) fournit la distance entre le poste de mesure et l'objet (19),
caractérisé en ce qu'
à partir d'une image de l'objet (19) prise à partir du poste de mesure, on détermine deux coordonnées dans l'espace dans un plan parallèle au plan de l'image, et on détermine une troisième coordonnée dans l'espace à partir de la valeur de la distance et des deux autres coordonnées dans l'espace.

azimutale Pos.

seitl. Pos.

Fig. 1

EP 0 877 951 B1

# Fig. 2

Triangulationsverfahren : ( gemessen werden $|\vec{O}|$, $\alpha$, $\beta$ )

zu ermitteln : x, y, z

$$z = |\vec{O}| \cdot \sin \alpha$$

$$|\vec{d1}| = |\vec{O}| \cdot \cos\alpha$$

$$x = |\vec{d1}| \cdot \cos \beta = |\vec{O}| \cdot \cos \alpha \cdot \cos \beta$$

$$y = |\vec{d1}| \cdot \sin \beta = |\vec{O}| \cdot \cos \alpha \cdot \sin \beta$$

Neues Verfahren : ( gemessen werden $|\vec{O}|$, x, z )

zu ermitteln ist : y

$$y = \sqrt{0^2 - z^2 - x^2}$$

Bestimmung der Position eines Objekts
relativ zum Meßort

Schritt

```
                    ┌─────────┐
                    │  Start  │
                    └────┬────┘
                         │
                         ▼
        ┌────────────────────────────────┐
101     │  Ermitteln des Abstands        │
        │  l0̅ zum Objekt auf             │
        │  optischem Weg                 │
        └────────────────┬───────────────┘
                         │
                         ▼
        ┌────────────────────────────────┐
102     │  optische Aufnahme des         │
        │  Objekts mittels einer         │
        │  Videokamera                   │
        └────────────────┬───────────────┘
                         │
                         ▼
        ┌────────────────────────────────┐
103     │  Erkennen des Reflexions       │
        │  spots in der Aufnahme         │
        └────────────────┬───────────────┘
                         │
                         ▼
        ┌────────────────────────────────┐
104     │  Ermitteln der waagerechten    │
        │  und der senkrechten Koordi -  │
        │  naten x,z innerhalb d.Aufnahme│
        └────────────────┬───────────────┘
                         │
                         ▼
        ┌────────────────────────────────┐
105     │  Berechnen der 3.Koordinate    │
        │  y mit $y = \sqrt{l0^2 - z^2 - x^2}$  │
        └────────────────┬───────────────┘
                         │
                         ▼
        ┌────────────────────────────────┐
106     │  Ausgabe der räumlichen        │
        │  Position ( x, y, z, ) d.Objekts│
        │  relativ zum Meßwert           │
        └────────────────┬───────────────┘
                         │
                         ▼
                    ┌─────────┐
                    │  Ende   │
                    └─────────┘
```

Fig. 3